Europäisches Patentamt

European Patent Office

Office européen des brevets

(11) Publication number: **0 419 399 A1**

# EUROPEAN PATENT APPLICATION

(21) Application number: 90630140.3

(22) Date of filing: **21.08.90**

(51) Int. Cl.⁵: **B60R 16/02**

(30) Priority: **21.08.89 IL 91372**

(43) Date of publication of application:
**27.03.91 Bulletin 91/13**

(84) Designated Contracting States:
**AT BE CH DE DK ES FR GB GR IT LI LU NL SE**

(71) Applicant: **Ariav, Ari**
**Moshav Kochav Michael 122**
**D.N. Ashkelon(IL)**

(72) Inventor: **Ariav, Ari**
**Moshav Kochav Michael 122**
**D.N. Ashkelon(IL)**

(74) Representative: **Waxweiler, Jean et al**
**OFFICE DENNEMEYER S.à.r.l. P.O. Box 1502**
**L-1015 Luxembourg(LU)**

(54) Vehicle protection and communication system.

(57) A vehicle protection and communication system which incorporates both a visual display of the magnitude of approach distances and an audible warning when these distances are closed within an unsafe range, together with an external message display subsystem and intrusion detection subsystem. The system is designed to display the distance between the rear of a vehicle and an obstacle which it is approaching while moving in reverse. The system operates based on ultrasonic transmission and reception and uses relatively simple timing and control circuitry, making it an inexpensive but reliable design. Enhanced vehicle safety is achieved by affording a driver with a pictorial representation in the form of an icon, visually and audibly warning him that a dangerous condition exists, in an attempt to avoid collisions. Messages concerning vehicle proximity to obstacles and vehicle operation may also be externally displayed.

FIG. 1

# VEHICLE PROTECTION AND COMMUNICATION SYSTEM

## FIELD OF THE INVENTION

The present invention relates to vehicular safety devices, and more particularly, to a vehicle protection and communication system including a subsystem for providing visual and audible warning of unsafe conditions caused by dangerous proximity between the vehicle and its surroundings, as well as an external message display subsystem and intrusion detection subsystem.

## BACKGROUND OF THE INVENTION

The prior art of automobile safety devices includes vehicle proximity warning systems based on the use of ultrasonic sensors to detect the sudden approach of a succeeding vehicle from the rear of an equipped vehicle, such as that disclosed in US Patent No. 4,694,296 to Kodera et al. In this system, the approach speed of the succeeding vehicle is detected with respect to the equipped vehicle from the difference between the frequencies of the reflected and transmitted ultrasonic waves. When the detected approach speed exceeds a predetermined value, an alarm is generated. A circuit for detecting the approach distance from the signal strength of the reflected waves is also provided, and an alarm is generated when the detected distance is below a predetermined value.

Another example of a vehicle proximity warning system using ultrasonic waves is disclosed in US Patent No. 3,662,328 to Spivak, in which the intensity of the transmitted signal from the equipped vehicle is proportional to the speed of the equipped vehicle, from which the transmission occurs. The system is designed to provide a warning that within a reception zone of the equipped vehicle, a hazard exists due to the proximity of vehicles.

Because they are zone-activated based on a predetermined distance, the above systems do not provide information on the amount of the distance remaining between the vehicle and the object as this distance is closed.

A popular safety-related vehicle warning system does not provide any sensor-derived proximity information, but is addressed to circumstances in which the driver is moving the vehicle in the reverse direction, when his field of vision is greatly reduced. A chime or bell or series of tones is generated to signal vehicle movement in the reverse direction. The intent of this system is to warn children and others of the reverse vehicle motion, so that they may have the opportunity to avoid the vehicle.

For the situation in which a vehicle approaches a stationary obstacle which is not easily visible, such as when backing out of a parking lot or garage, it is helpful to make the driver aware of the approach distance in quantitative terms, so as to prevent collisions even at the generally slow speeds involved.

There are known vehicle communication systems based on use of multiplex data transmission methods, as listed below:

US Patent 4,845,708 to Herrman et al;
US Patent 4,821,262 to Futami;
US Patent 4,809,266 to Okada;
US Patent 4,780,620 to Ahs et al;
US Patent 4,736,367 to Miesterfeld et al;
US Patent 4,677,308 to Miesterfeld et al
US Patent 4,370,561 to Briggs;
US Patent 4,355,385 to Hampshire et al;
US Patent 4,293,947 to Brittain et al;
US Patent 4,290,134 to Hampshire; and
US Patent 3,814,861 to Robbins.

In current vehicle wiring systems, individual wires are provided for each car function such as headlights, horn, turn signal blinker, brake pedal, license plate lighting, etc. This requires use of a heavy gauge wire to carry the necessary current for each function, and the result is that over a substantial length of the vehicle, a bulky wiring harness is provided to support these wires. A disadvantage of this approach is an increased direct cost for manufacturing material and labor, as well as the costs associated with the after sales accessory market, which supplies additional parts such as bimetal blinker controllers. The maintenance cost of vehicle electrical systems has always been a cause for concern for a vehicle owner, because of complications in tracing the source of an electrical malfunction.

The problem of vehicle theft continues to be a major source of concern for vehicle owners, and the anti-theft device market has proliferated with many mechanical and electrical systems designed to reduce this risk. Generally, each of these existing devices requires the vehicle owner to activate an alarm system or to mechanically lock the shift lever, etc. This is sometimes inconvenient, especially for short periods between exit and entry into the vehicle, and there is a tendency not to properly use these devices.

Therefore, it would be desirable to provide a comprehensive vehicle protection and communication system, which integrates several requirements related to avoidance of obstacles, while conserving vehicle wiring and preventing theft.

It would also be desirable to provide a vehicle proximity warning system that indicates the approach distance to stationary obstacles in the path of vehicle movement.

It would further be desirable to provide a vehicle communication system that is capable of distributing vehicle operation data throughout the vehicle, based on the use of a single data highway which concentrates required information in simplified form.

It would further be desirable to provide an anti-intrusion system designed to operate automatically based on normal driver behavior, and minimize reliance on driver operation.

## SUMMARY OF THE INVENTION

Accordingly, it is a principal object of the present invention to overcome the above-mentioned limitations of prior art systems and provide a vehicle protection and communication system which incorporates both a visual display of the magnitude of approach distances and an audible warning when these distances are closed within an unsafe range, together with an external message display subsystem and intrusion detection subsystem.

In accordance with a preferred embodiment of the present invention, there is provided a vehicle protection and communication system comprising:
a plurality of sensor means mounted at various points on the vehicle and providing information regarding vehicle operation, at least one of said sensor means comprising vehicle proximity warning means for generating and receiving ultrasonic pulses for providing vehicle proximity information;
communication means connected to said plurality of sensor means;
control means for receiving said sensor means information including said vehicle proximity information via said communication means and processing it to provide at least one of control and indication functions relating to said vehicle operation,
said control functions being distributed to said vehicle via said communication means for modifying said vehicle operation,
said indication functions including display of said vehicle proximity information within the vehicle as an icon representing an approach distance for alerting the driver.

In the preferred embodiment, the vehicle protection and communication system comprises a proximity warning subsystem designed to display the distance between the rear of a vehicle and an obstacle which it is approaching while moving in reverse. The proximity warning subsystem uses relatively simple timing and control circuitry, making it an inexpensive but reliable design which provides enhanced vehicle safety by affording a driver with a pictorial representation in the form of an icon, visually and audibly warning him that a dangerous condition exists, in an attempt to avoid collisions.

Further in accordance with the preferred embodiment, said vehicle proximity warning means for indicating the approach distance to an obstacle comprises:
means for periodically transmitting ultrasonic energy pulses and means for receiving reflected ones of said transmitted ultrasonic energy pulses, and said control means comprises:
means for amplifying said received pulses and providing an output signal;
timing means responsive to said output signal for determining the time interval between said transmitted and received pulses;
converter means producing a distance value in proportion to said time interval;
comparator means for determining the greater of said distance value and a set of predetermined threshold values each corresponding to an approach distance to the obstacle; and
display means responsive to said comparator means for displaying an icon representing the approach distance.

The proximity warning subsystem operates based on ultrasonic transmission and reception using a unit mounted on the rear bumper of the vehicle. When the driver reverses the vehicle direction, the unit is activated and emits a periodic burst of ultrasonic pulses in the rear direction. The reflected pulses (echoes) are received by a microphone and amplified for use by a comparator which compares them with a voltage threshold, and if the threshold is exceeded, this indicates the presence of an obstacle in the path of movement.

Once it has been determined that an obstacle is present, the comparator initiates a control signal which is fed to a timing-to-voltage converter wherein a voltage discharge function on a capacitor is provided. The voltage discharge function commences at a known voltage with each burst of ultrasonic pulses, and continues at a predetermined rate until the control signal arrives from the comparator. If no signal arrives, the capacitor is nearly discharged to zero and then the discharge function begins again. By calibration of the rate of voltage discharge during the periodic interval between pulse bursts, an approach distance measurement to the obstacle is provided.

In accordance with another embodiment of the proximity warning subsystem, a microprocessor equipped with an internal A/D converter is provided, and another method is used for determining the approach distance based on receipt of reflected pulses. This method involves use of a high-gain amplifier for feeding the reflected pulses to the internal A/D converter, so that the CPU may examine the signal level to determine if an obstacle exists.

When a control signal arrives indicating the presence of an obstacle, the voltage discharge function ceases and the existing discharge voltage is held and fed to a comparator array and LED display providing the icon. Based on the voltage level at this instant, the approach distance is known and the comparator array will determine the set of LEDs to be lit, providing the driver with quick feedback at a glance by visual indication of the approach distance. As this distance is closed, the LEDs forming the icon are individually extinguished.

The icon forming the visual display may be provided as a clip-mounted unit suitable for placement on or near the rear window of the vehicle so as to be visible when the driver turns his head while moving in reverse, or it may be placed so as to be visible in the rear view mirror, or both.

A feature of the invention is the provision of an audible indication via a buzzer, which is activated simultaneously with the LEDs to indicate a dangerous approach distance, and can be provided with a varying pitch as this distance is closed.

Another feature of the invention is the provision of an additional transmission/reception unit which can be mounted laterally apart on the bumper from the first unit, to provide greater measurement accuracy and better protection over the vehicle width.

Still another feature of the invention is the provision of an operational mode in which a visual warning is provided to the driver of a following vehicle, when his vehicle approaches the equipped vehicle too closely. This mode attempts to correct the poor driving habit known as "tailgating", and reminds the other driver to maintain a safe stopping distance behind the equipped vehicle. This feature is provided by a signal which can be used to control a rapid flashing sequence of brake light operation.

Yet another feature of the invention is the provision of a hood-protected transmission/reception unit which substantially reduces weather interference with ultrasonic pulses.

The simple but reliable circuit design for the visual and audible indication of dangerous approach distance conditions provides increased vehicle safety at reasonable cost to the user. The communication means allows a reduction in wiring costs by concentrating several sources of information on a single highway.

An external message display subsystem is also provided for communication of messages to a following driver in relation to a dangerous approach distance between his vehicle and the equipped vehicle. These messages can also be provided while the equipped vehicle is parked, so that a warning is provided to the driver of a vehicle which maneuvers too closely during parking adjacent the equipped vehicle.

In addition, the external message display subsystem will display a stop warning light when the vehicle decelerates, by means of an on-board accelerometer. This provides a pre-stop alert for greater safety. Another form of message is an arrow indicating the direction of the turn signal. Similarly, an appropriate message is displayed when the vehicle reverses direction. The rate of blinker operation may be variable in relation to the progress of the vehicle through a turn, or during a change-of-lane maneuver, to raise the level of awareness on the part of the following driver.

An intrusion detection subsystem is also provided for detecting unauthorized entry into the vehicle and providing an alarm which alerts those in the vicinity of this condition. A message may also be displayed. The intrusion detection subsystem is activated automatically by sensing the driver's presence in the vehicle, and as he leaves, the unit is armed. The unit is disarmed either by remote control or driver operation upon engine ignition within a predetermined interval after entering.

Other features and advantages of the invention will become apparent from the drawings and the description contained hereinbelow.

## BRIEF DESCRIPTION OF THE DRAWINGS

For a better understanding of the invention with regard to the embodiments thereof, reference is made to the accompanying drawings, in which like numerals designate corresponding elements or sections throughout, and in which:

Fig. 1 is an electronic block diagram of a preferred embodiment of a vehicle proximity warning subsystem constructed and operated in accordance with the principles of the present invention;

Figs. 2-3a are electronic circuit schematics of the subsystem of Fig. 1, and Fig. 3b shows a hood-protected transducer;

Fig. 4 shows a circuit schematic for addition of a safe stopping distance feature to the subsystem of Figs. 1-3; and

Fig. 5 is a display layout diagram of an icon for use in the subsystem of Figs. 1-4, to provide a driver with a visual indication of a dangerous approach distance for his vehicle;

Fig. 6 is an electronic circuit schematic diagram of an integrated vehicle protection and communication system combining the proximity warning subsystem, message display subsystem, and intrusion detection subsystem; and

Figs. 7-10 are flowchart diagrams describing the operation of the inventive integrated vehicle protection and communication system.

## DETAILED DESCRIPTION OF A PREFERRED EMBODIMENT

The vehicle protection and communication system of the present invention comprises three subsystems: a proximity warning subsystem for indicating dangerous approach distances for the equipped vehicle, an external message display subsystem for communication to a following driver in relation to the vehicle approach distance, and an intrusion detection subsystem for detecting unauthorized entry into the vehicle and providing an alarm to alert those in the vicinity of this condition.

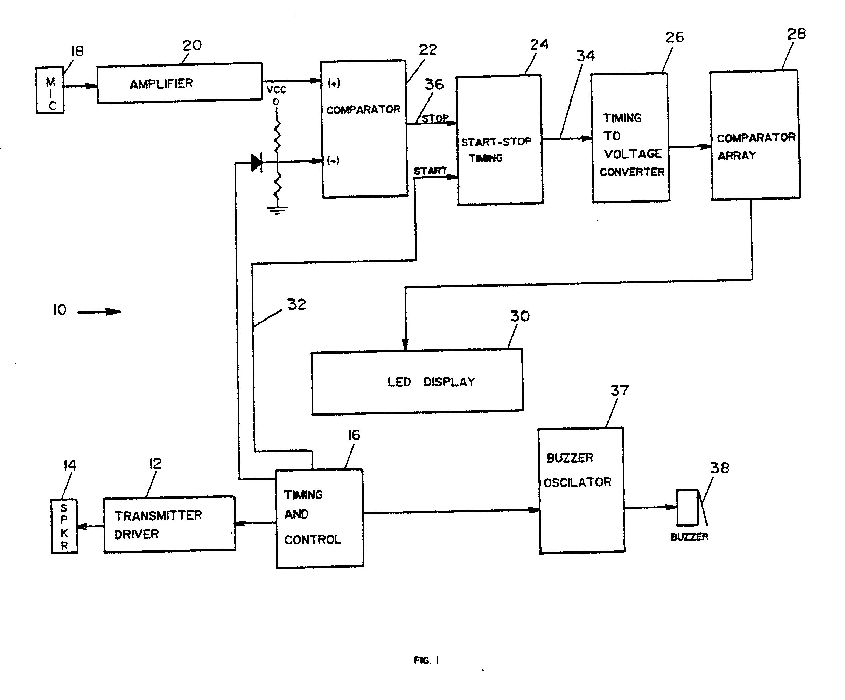

Referring now to Fig. 1, there is shown an electronic block diagram of a vehicle proximity warning subsystem 10 constructed and operated in accordance with the principles of the present invention. In the preferred embodiment, the proximity warning subsystem 10 is designed to display the distance between the rear of an equipped automobile and an obstacle which it is approaching while moving in reverse. The object of subsystem 10 is to give the driver a visual and audible indication that a dangerous condition exists, in an attempt to avoid a collision.

Subsystem 10 comprises a transmitter driver 12, which develops periodic bursts of ultrasonic energy for transmission via a speaker 14 which is typically mounted on the automobile rear bumper. The periodicity of transmitted ultrasonic pulses is determined by timing and control circuit 16, which also determines the time when reflected pulses are received. A microphone 18 also mounted on the rear bumper receives energy of the reflected ultrasonic pulses, and this is amplified by amplifier 20. Speaker 14 and microphone 18 comprise a transmission/reception unit.

As further described herein, the reflected pulses are used to determined the approach distance to an obstacle in the path of the vehicle, and this is accomplished by the operation of a comparator 22, start-stop timing circuit 24, and timing-to-voltage converter 26. A comparator array 28 operates to translate the measured distance into an icon comprising visual LED display 30, thereby warning the driver of a dangerous condition.

In operation, when arranged to measure approach distances from the rear of an automobile, subsystem 10 is powered by the reverse light system on the vehicle, and is activated when the driver reverses direction. Subsystem 10 emits a burst of ultrasonic pulses which are periodically transmitted to the environment under control of timing and control circuit 16. In addition, timing and control circuit 16 initiates a "start" control signal 32 which is fed to start-stop timing circuit 24 to generate a start/stop signal 34 for use by timing-to-voltage converter 26. A voltage discharge function on a capacitor commences in converter 26 upon receipt of start/stop signal 34, co-incident with the transmitted burst of ultrasonic pulses.

The echoes of the transmitted pulses are received by microphone 18 and input amplifier 20 amplifies the low-level signals from microphone 18 to a level at which comparator 22 can distinguish between stray noises and the first echo. Comparator 22 determines the first echo by comparison of the received signal level with a threshold level, and if the level is higher than this level, comparator 22 initiates a "stop" control signal 36 which is fed to start-stop timing circuit 24.

In response, stop/start signal 34 is fed to timing-to-voltage converter 26 and when it arrives, the voltage on the capacitor is the relevant voltage. The starting point of the voltage discharge in converter 26 occurs when system 10 emits its transmission burst. At that instant, a known voltage exists on the capacitor, and this voltage discharges at a predetermined rate until the stop/start signal 34 arrives. If no signal arrives, the capacitor is discharged close to zero and the cycle is repeated.

The discharge voltage will be held if the start/stop signal 34 arrives, and since this voltage is directly proportional to the approach distance, it is fed to comparator array 28 and LED display 30. In accordance with the voltage level, comparator array 28 will determine the appropriate set of LEDs to be lit, thus providing the driver with a visual indication of the vehicle approach distance to the obstacle detected by the echoes of the transmitted pulses.

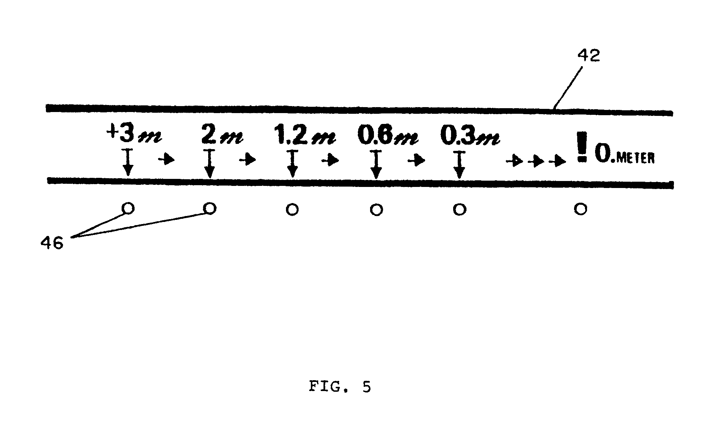

Initially, all of the LEDs forming the icon in display 30 are lit if the approach distance exceeds 3 meters (see Fig. 5). These may be arranged as several color LEDs for indicating the individual threshold approach distances, for example, green and yellow, etc. This provides the driver with quick feedback at a glance, based on the amount and color of the LEDs. As the approach distance closes, the individual LEDs are extinguished, and a red LED may be arranged to light only when distances smaller than 45 cm are detected. A buzzer oscillator 37 and buzzer 38 can be activated simultaneously with the red LED to indicate the vehicle is too close to an obstacle.

An additional buzzer can be mounted externally, providing audible tones as a warning that the vehicle is moving in the reverse direction. The audio pitch may vary with the distance, and is provided during the reception interval only, so as not to interfere with the transmission of ultrasonic pulses.

In the preferred embodiment, the interval between pulse repetitions is designed to be not more than 100 msec. Since half of this interval is for transmission and the other half for reception, a distance of 50 msec x 34 cm/msec can be measured, where 340 m/sec is the speed of sound. Thus, for 34 cm of distance, 1 msec elapses for the round trip of pulse transmission and reception. For example, if the interval between the transmission and the echo is 100 msec,there are 50 msec x 34 cm/msec = 17 meters distance to the obstacle.

The vehicle proximity warning subsystem 10 is designed for a flexible time interval between repetition of pulse transmissions. As the time interval for reception of reflected pulses between transmissions decreases with closing of the approach distance, the pulse transmission repetition rate increases, while a 50% duty cycle is maintained between them. Thus, trigger of the next pulse burst is caused by reception of echoes from the previous pulse transmission. This allows for greater accuracy in measurement of small distances, where the danger is increased.

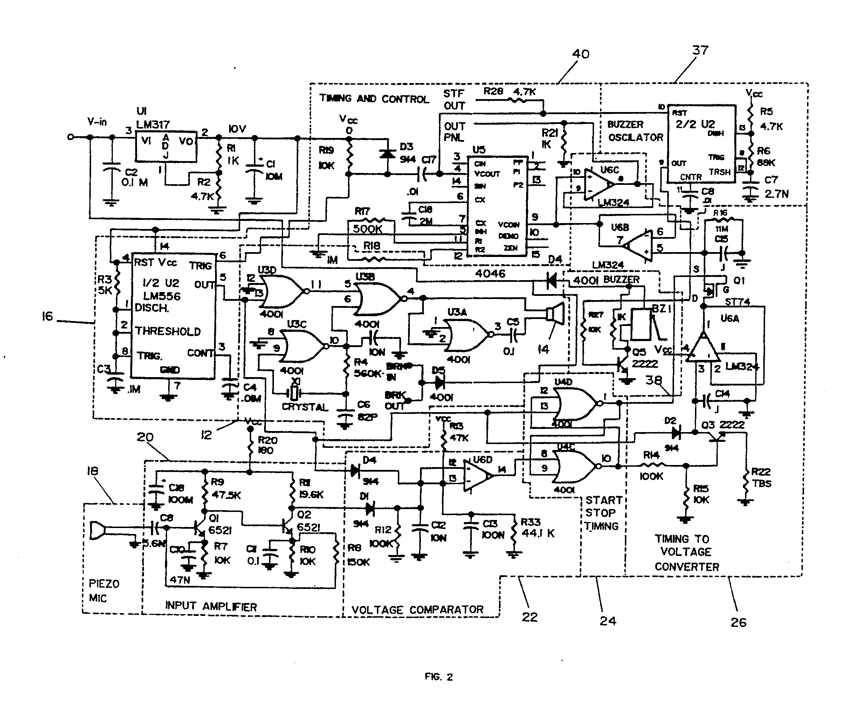

Referring now to Figs. 2-3a, there are shown electronic circuit schematics of the preferred embodiment of the vehicle proximity warning subsystem 10 illustrated in the electronic block diagram of Fig. 1. Typical component values are shown, allowing for implementation of these circuits based on skill of the art electronic design techniques.

Speaker 14 is preferably provided as a piezoelectric device which requires more than one pulse to activate it since it has a very high Q, and typically a string of twelve pulses is provided to achieve the maximum output. The U2 trigger portion of timing and control circuitry 16 provides the string of pulses to the U3 portion of transmitter driver 12, which is a booster and oscillator and drives speaker 14 output. The speaker 14 and microphone 18 are combined in one housing using standard Nippon ceramic types, like model 40-16 R/T, 40 Khz operating frequency.

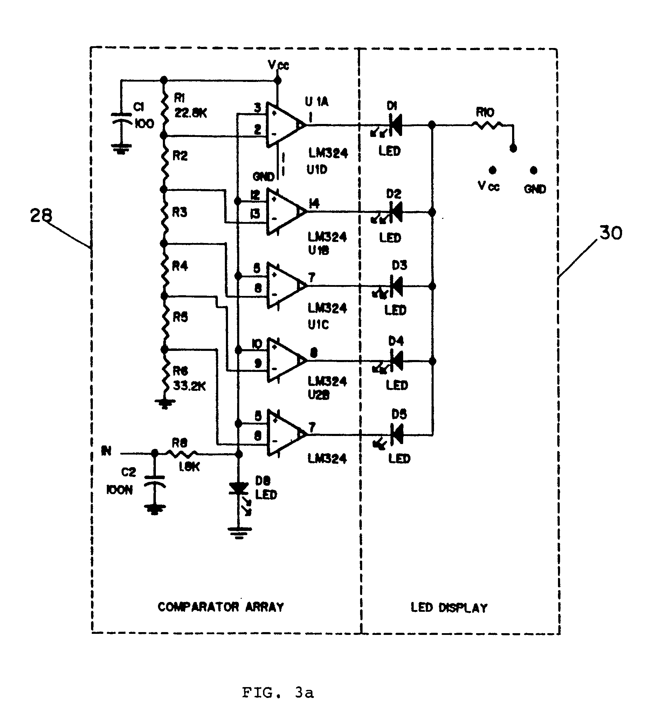

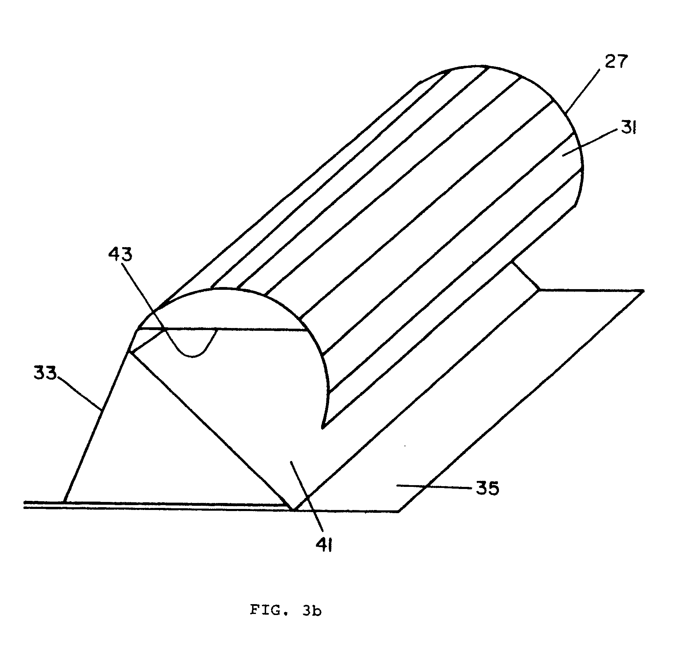

In Fig. 3b, there is shown a hood-protected transmission/reception unit 27 combining speaker 14 and microphone 18. Unit 27 is protected from the effects of weather and precipitation by a hood 31, typially fabricated of plastic, which is integrally formed with back and base portions 33 and 35. Base portion 35 is typically mounted on the rear bumper. Suppported at approximately a forty-five degree angle to base portion 33 is a reflector 41, preferably fabricated of metal or plastic.

Under hood 31, a mounting board 43 is provided in substantially horizontal orientation. Mounting board 43 is releasably held by fastening hardware under hood 31, and speaker 14 and microphone 18 are mounted on board 43, facing downward, so as to transmit and receive by reflection from reflector 41 at a forty-five degree angle of incidence. In this fashion, unit 27 achieves transmission and reception of pulses using reflector 41 substantially without weather interference. It will be appreciated that other reflection arrangements are possible to substantially reduce weather interference, including use of multiple reflectors 41 and appropriate mounting of transmission/reception unit 27.

The echoes which are returned to microphone 18 are amplified by input amplifier 20 and sent to comparator 22 in which the threshold level for detecting pulses representing the first echo is determined by resistors R13 and R23. The rate of voltage discharge in timing-to-voltage converter 26 is determined by resistor R22, and this may be selected for the approach distance range desired, since these are directly proportional.

It will be appreciated by those skilled in the art that since subsystem 10 uses a voltage discharge function in timing-to-voltage converter 26, it does not depend on conventional timing counter circuitry to determine, the time to reception of the reflected pulses. Thus, after each transmission interval, the U2 and U3 portions of transmitter driver 12 may be temporarily shut down so as to eliminate the generation of stray ultrasonic pulses during the reception interval. This further simplifies the design by enabling the use of non-shielded cables to the transmission/reception units 14, 18.

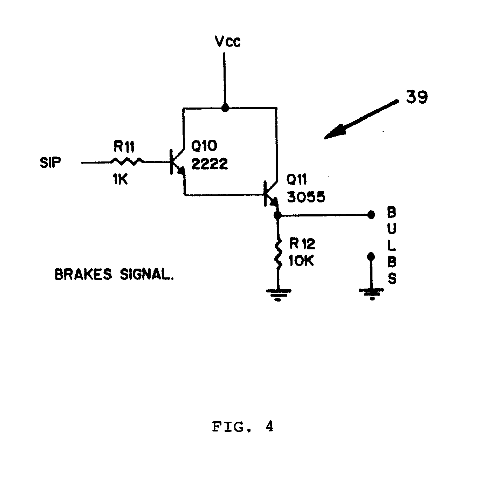

As shown in Fig. 4, a feature of the invention is the provision of a brake light circuit 39 which is used in an operational mode in which a visual warning is given to the driver of a following vehicle. This mode is operative when the following vehicle approaches the equipped vehicle too closely, and reminds the other driver to maintain a safe stopping distance. This feature is provided by a signal 40 (STP OUT) from timing and control circuit 16, which can be used to control a rapid flashing sequence of brake light operation, when the brake signal is applied at connection point "BRK IN" to diode D5 in transmitter driver 12 (Fig. 2). The flashing rate is variable and increases when the approach distance is closed.

Although the above description relates to an arrangement in which a single transmission/reception unit 14, 18 is mounted on the rear bumper of an automobile equipped with subsystem 10, it will be appreciated that a second such unit can be used. In this arrangement, the second unit is laterally spaced apart from the first one such that the rear bumper is protected across its width, allowing for greater measurement accuracy.

It will also be appreciated that although the foregoing description relates to measurement of approach distances to the rear of the equipped vehicle by mounting of transmission/reception unit 14, 18 on the rear bumper, other alternative arrangements are possible for mounting this unit. For example, by mounting the unit on the front bumper of the vehicle, obstacles in the forward direction are detected and approach distances can be measured. The same principles apply to side fender mounting of the transmission/reception unit 14, 18.

Turning now to Fig. 5, there is shown a display layout 42 of an icon for use in the subsystem of Figs. 1-4, comprising a linear arrangement of LEDs 46 indicating a decreasing magnitude of approach distances, with a red LED indicating the smallest distance and the increasing danger as this distance is closed. The icon may be provided as a clip-mounted unit suitable for placement near the rear window of the vehicle so as to be visible when the driver turns his head while moving in reverse, or it may be placed so as to be visible in the rear view mirror, or both.

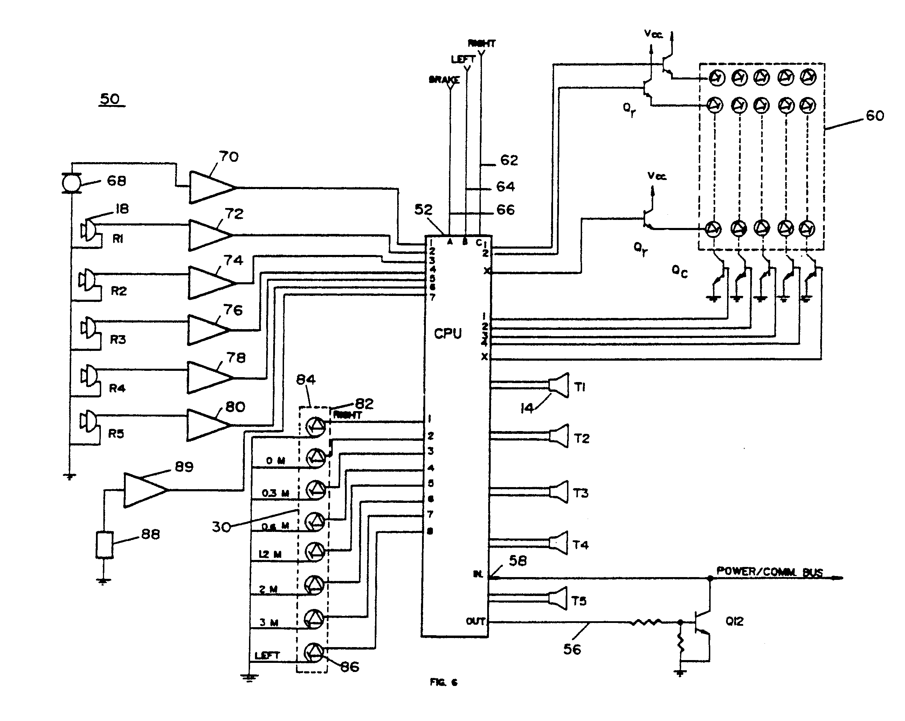

Fig. 6 is an electronic circuit schematic diagram of an integrated vehicle protection and communication system 50 combining the proximity warning subsystem, an external message display subsystem, and intrusion detection subsystem. The heart of the overall system 50 is a CPU 52 furnished as a 6805 microprocessor, which controls the timing and operation of the various subsystems.

The CPU 52 communicates with the various subsystems via a communications bus 54, typically provided by the existing power distribution wiring in a retrofit application. Alternatively, a single communications highway can be used for both data and power distribution to existing vehicle devices, e.g., turn signal blinkers. This enables data transfer over a power line, by loading bus 54 in coded fashion in order to create a minor voltage drop which is sensed by other devices, causing each one to respond individually based on its coded address. The loading of bus 54 is performed via switching transistor Q12, which may be a 2N222 type, as controlled by coding signal 56 from CPU 52. The bus 54 is also connected to one of the analog inputs 58, to analyze the data received by CPU 52 from the vehicle devices, and to provide a self-check of the transmitted data.

The external message display subsystem comprises an LED matrix display 60 or other suitable display means for use in the rear window of the vehicle. In the preferred embodiment, matrix display 60 is formed of five to seven rows of LEDs and approximately twenty columns, although this may be expanded as needed. Matrix display 60 is supplied with current via row and column transistor drivers Qr and Qc, and can display messages to the driver of the vehicle following the equipped vehicle, such as when the equipped vehicle slows down, stops or reverses its direction. A directional arrow can be shown on display 60 as a message when the vehicle turns, or by rapid flashing while changing lanes.

CPU 52 is fed with inputs 62-66 respectively, from the right and left turn signals and the brake pedal. An accelerometer sensor 68 is provided to indicate the deceleration of the vehicle via amplifier 70, which information is fed to CPU 52. This information can be converted into a message on matrix display 60 for the driver of the following vehicle, indicating to him that the equipped vehicle is slowing down.

It will be appreciated by those skilled in the art that the external message display subsystem may be modified to incorporate multiple sensors relating to the state of vehicle safety and operation, for example, by applying sensors to detect tire pressure, oil level, battery voltage, brake system fluid level, etc. The information gathered by these sensors can be displayed in message form so that even from outside the vehicle, conditions of operation can be presented. Externally displayed messages are useful in many applications, including normal garage maintenance, and on-site vehicle inspection by road safety authorities. Storage of vehicle sensor information is also possible for later diagnosis, or for "black box" recording in case of accidents.

A set of individual piezoelectric transmitter receiver units T1/R1 - T5/R5 is provided by a speaker 14 and microphone 18 combination as before, in one housing using standard Nippon ceramic types, like model 40-16 R/T, 40 Khz operating frequency. Units T1/R1 and T2/R2 are respectively mounted on the right and left side of the vehicle rear bumper. Another pair of units T4/R4 and T5/R5 are respectively mounted on the right and left sides of the vehicle, typically near the side view mirror. These latter units offer warning of dangerous vehicle proximity to other vehicles, such as during passing where "blind spots" exist.

The patterns of ultrasonic transmission sent via transmitter portions of units T1 R1 - T5/R5 are controlled by CPU 52, and are generated in accordance with the area to be covered by the particular unit. The receiver portions of each of units T1/R1 - T5/R5 feed their output to a respective one of amplifiers 72-80, which may be MC 34074 types, which in turn feed CPU 52 with analog inputs.

These analog inputs are converted to digital information for processing to determine the approach distance to the obstacle in proximity to the equipped vehicle.

A cross-scanning approach may be used whereby the left side of the vehicle transmits the ultrasonic pulse bursts and the echoes are received by the right side unit, and vice-versa. This technique provides an additional safety factor since the pattern of coverage is expanded.

A front panel 82 comprising LED display 30 forms an icon which provides the driver with a visual indication of the vehicle approach distance to the obstacle detected by the echoes of the transmitted pulses from each of units T1/R1, T2/R2, T4/R4 and TS/R5. Additional LEDs 84-86 are used to indicate whether the left or right side of the vehicle is active based on a received echo, depending on which of the sides is nearer an obstacle.

As will be described further herein, based on use of the digital information provided to CPU 52, the software processing enables a large degree of flexibility in the response of vehicle protection and communication system 50 to the information it receives. For example, for each of the transmitter/receiver units T1/R1 - T5/R5, prior to receipt of any echoes, the initial behavior of the unit is evaluated by CPU 52 to determine the reference conditions corresponding to quiescent operation, and this behavior can be stored in order to develop a pattern of all the units. Based on this pattern, CPU 52 can differentiate quiescent operation of each transmitter/receiver unit from normal operation under conditions when echoes begin to be received by the units. This greatly enhances the system sensitivity, allowing detection of echoes at levels just above the reference condition.

The ability to differentiate between quiescent and normal operating conditions enables provision of a "silent monitor" feature to vehicle protection system 50, serving to monitor conditions surrounding the vehicle even when it is parked. Thus, an external message can be provided on matrix display 60 while the equipped vehicle is parked, so that a warning is provided to the driver of a vehicle which maneuvers too closely, e.g., within 20 cm adjacent the equipped vehicle. An additional option is the provision of an automatic camera to photograph the sensor area indicating close proximity.

An intrusion detection subsystem is provided as transmitter/receiver unit T3/R3 mounted within the vehicle interior, which operates together with an infrared sensor 88. The intrusion subsystem is armed and disarmed automatically based on the anticipated behavior of a normal driver. Approximately two minutes after unit T3/R3 first detects that the vehicle is vacant and its doors and windows are closed, if no abnormal echoes are detected within the vehicle interior, the intrusion subsystem is automatically armed. The intrusion subsystem may be disarmed externally by use of a remote control infrared signal which is detected by infrared sensor 88, and fed via amplifier 89 to CPU 52. This produces an internal light within the vehicle, increasing driver convenience upon entering it.

Another method for disarming the intrusion detection subsystem is upon normal entry by the driver into the vehicle, when engine ignition occurs.

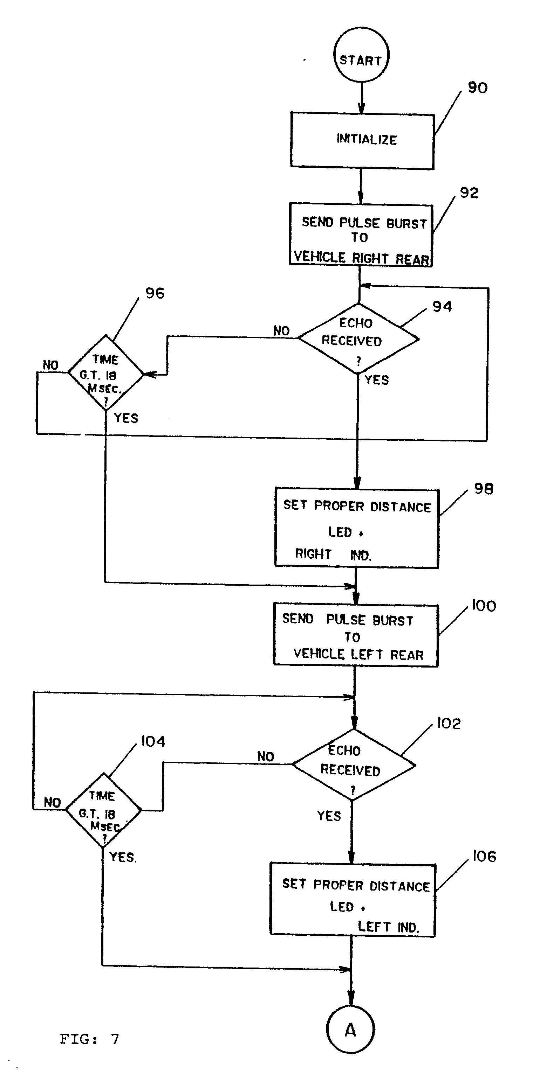

Referring now to Figs. 7-10, there are shown flowcharts describing the operation of vehicle protection and communication system 50. In Fig. 7, once system 50 has been initialized in block 90, a vehicle rear protection subroutine is run. In block 92, a pulse burst is sent from T1/R1 on the right rear side of the vehicle, and in block 94, it is determined whether an echo has been received. If no echo has been received and the period which has elapsed since the pulse burst was generated does not exceed 18 msec, block 96 returns control to block 94 for detection of further echoes. If, however, the time period without echoes exceeds 18 msec, the obstacle is considered to be too far away to be of interest.

If it has been determined in block 94 that an echo has been received, the proper LED is lit in block 98 to indicate the approach distance on the right side of the vehicle. The same operational sequence is repeated in blocks 100 - 106, where the pulse burst and echoes for the left side of the vehicle are generated. and received by T2/R2.

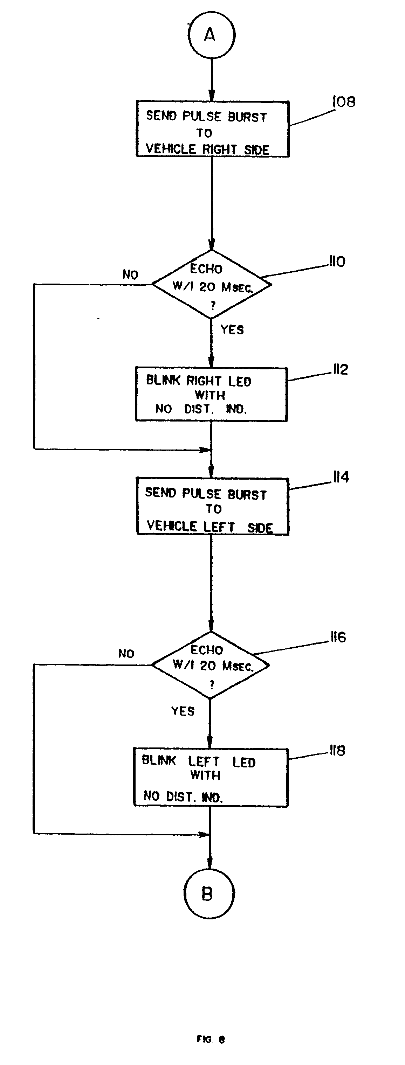

In Fig. 8, a vehicle side protection subroutine is run. In block 108, a pulse burst is sent from T4/R4, and block 110 determines if an echo is received within 20 msec, meaning an approach distance of approximately 3.5 meters. If this is the case, block 112 blinks the right set of LEDs with no distance indication, for alerting the driver of the approach of a vehicle from the right side. If there is no echo, block 112 is bypassed, and the same operational sequence is provided in blocks 114 -118, for the left side of the vehicle.

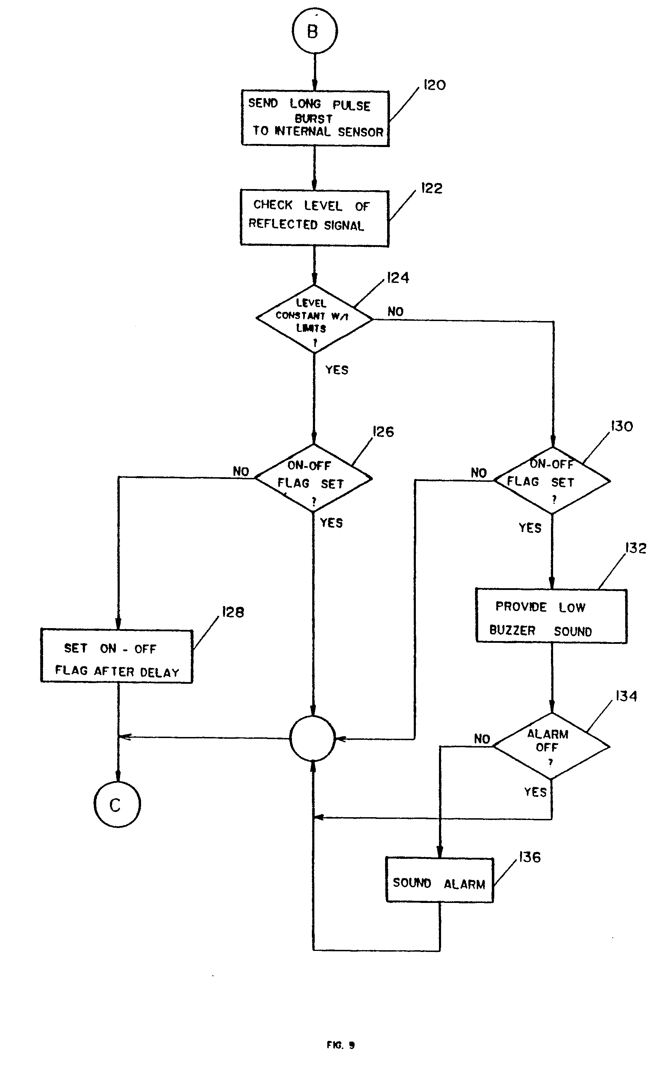

Turning now to Fig. 9, an anti-intrusion subroutine is run, in which block 120 sends a long burst (approx. 100 msec) of pulses to the T3/R3 unit located in the vehicle interior. Block 122 checks the level of the echoes reflected back, and block 124 determines whether the level is constant within a range of limits, which would tend to indicate a steady-state situation in the vehicle interior, and a likelihood of no intruder. If a constant level is determined in block 124, block 126 determines whether the on-off flag is set, which means the anti-intrusion subsystem is armed, and if this is so, the subroutine continues to point C. If the on-off flag is not set, meaning the anti-intrusion subsystem is disarmed, block 128 sets it after approximately a one minute time delay, and the subroutine continues to point C.

If, however, the level of the echoes detected in block 124 is changing, the on-off flag is tested in block 130, and if it is not set, the subroutine continues to point C. If the on-off flag is set which means that the alarm is activated, the existence of a changing level of echoes as detected in block 124 means that there is a potential intruder. Block 132 initiates a short buzz to remind the driver that the engine must be started to disarm the alarm. Block 134 tests whether the driver has in fact started the engine within a predetermined time limit. If not, block 136 sounds the alarm, otherwise, control advances to point C.

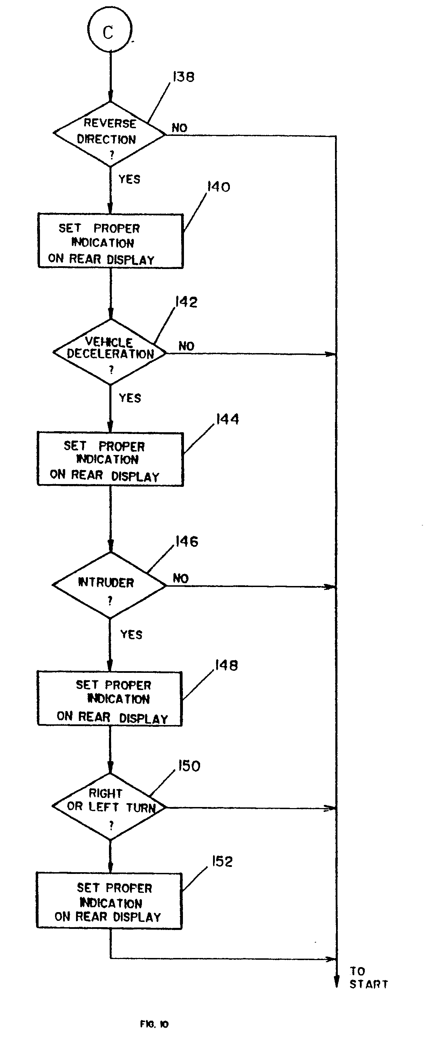

In Fig. 10, a subroutine is run for determining the appropriate vehicle indications. In each block, determination that a particular condition does not exist returns control to the beginning of the overall vehicle protection routine (Fig. 7). Beginning with block 138, it is determined if the vehicle is moving backwards. If so, the vehicle proximity warning subsystem operates, and in block 140, an external message is provided on the matrix display 60 for following drivers. If block 142 determines that the vehicle is decelerating, block 144 sets the proper indication on display matrix 60. If block 146 determines that there is an intruder in the vehicle, block 148 sets the proper indication on display matrix 60.

The indications regarding the right and left turn signals are determined by block 150, and any other predetermined message can be displayed by block 152, before the software returns its starting point on Fig. 7.

Having described the invention with regard to certain specific embodiments thereof, it is to be understood that the description is not meant as a limitation since further modifications may now suggest themselves to those skilled in the art and it is intended to cover such modifications as fall within the scope of the appended claims.

Claims

1. A vehicle protection and communication system comprising:
a plurality of sensor means mounted at various points on the vehicle and providing information regarding vehicle operation, at least one of said sensor means comprising vehicle proximity warning means for generating and receiving ultrasonic pulses for providing vehicle proximity information;
communication means connected to said plurality of sensor means;
control means for receiving said sensor means information including said vehicle proximity information via said communication means and processing it to provide at least one of control and indication functions relating to said vehicle operation,
said control functions being distributed to said vehicle via said communication means for modifying said vehicle operation,
said indication functions including display of said vehicle proximity information within the vehicle as an icon representing an approach distance for alerting the driver.

2. The system of claim 1 wherein said control means provides messages relating to said vehicle operation for display external thereto, and further comprising means for displaying said messages for observation external to the vehicle, said external display means comprising a matrix display using at least one type of display element such as LEDs, LCDs and the like.

3. The system of claim 2 wherein said plurality of sensor means includes an accelerometer for measuring vehicle deceleration and providing a message in accordance therewith to a following driver via said external display means.

4. The system of claim 2 wherein said plurality of sensor means includes a tire pressure gauge for measuring vehicle tire pressure and providing a message in accordance therewith via said external display means.

5. The system of claim 2 wherein said plurality of sensor means includes a voltmeter for measuring battery voltage and providing a message in accordance therewith via said external display means.

6. The system of claim 2 wherein said plurality of sensor means includes turn signal indication means for providing a directional arrow as a message to the driver of a following vehicle via said external display means.

7. The system of claim 6 wherein said directional arrow message is provided as a rapid flashing sequence when the equipped vehicle changes lanes in traffic.

8. The system of claim 1 wherein said vehicle proximity warning means for indicating the approach distance to an obstacle comprises:
means for periodically transmitting ultrasonic energy pulses and means for receiving reflected ones of said transmitted ultrasonic energy pulses,
and wherein said control means comprises:
means for amplifying said received pulses and providing an output signal;
timing means responsive to said output signal for determining the time interval between said transmitted and received pulses;
converter means producing a distance value in proportion to said time interval;
comparator means for determining the greater of said distance value and a set of predetermined threshold values each corresponding to an approach distance to the obstacle; and

internal display means responsive to said comparator means for displaying an icon representing the approach distance.

9. The system of claim 8 wherein said timing means comprises a first comparator means for monitoring the voltage level of said output signal and a predetermined threshold voltage and providing a control signal when said output signal voltage level exceeds said threshold voltage, indicating the presence of an obstacle, and determining a time interval.

10. The system of claim 8 wherein said converter means produces a voltage discharge function having a predetermined discharge rate and being responsive to said time interval for establishing a voltage discharge level at which said voltage discharge function is interrupted.

11. The system of claim 10 wherein said comparator means monitors said voltage discharge level and a set of predetermined voltage threshold values each corresponding to an approach distance to the obstacle, and determines a display control signal dependent upon which of said threshold values is exceeded by said voltage discharge level, said internal display means being responsive to said display control signal for indicating the approach distance.

12. The system of claim 10 wherein said display icon comprises an arrangement of light-emitting diodes (LEDs) and said voltage discharge level is fed to said comparator means comprising a comparator array for determining the appropriate set of LEDs to be lit in said internal display icon, individual LEDs being extinguished as the approach distance is closed.

13. The system of claim 8 wherein said means for receiving said reflected pulses comprises a microphone whose output is fed to said amplification means to develop said output signal voltage for comparison with said predetermined threshold voltage by said first comparator means.

14. The system of claim 8 wherein the approach distance to the obstacle is directly proportional to the time interval between transmission and reception of said ultrasonic pulses.

15. The system of claim 8 wherein said transmission periodicity is flexibly adjusted in accordance with said time interval.

16. The system of claim 8 wherein said means for transmitting said ultrasonic energy pulses comprises a piezoelectric transducer.

17. The system of claim 8 wherein said means for transmitting and means for receiving said ultrasonic energy pulses are mounted on both sides of the rear bumper of the vehicle.

18. The system of claim 17 wherein said periodic transmission of ultrasonic pulses commences when the vehicle moves in the rear direction, and includes cross-scanning by which transmission is initiated from either of right rear and left rear bumper locations, and is received on an opposite bumper side.

19. The system of claim 8 wherein said means for transmitting and means for receiving said ultrasonic energy pulses is substantially protected from weather interference by an arrangement including a hooded cover and at least one ultrasonic energy pulse reflector.

20. The system of claim 8 wherein said means for transmitting and means for receiving said ultrasonic energy pulses are mounted on the sides of the vehicle.

21. The system of claim 20 wherein said internal display icon comprises an arrangement of LEDs which includes an indication of right and left side proximity.

22. The system of claim 8 wherein said transmission means is temporarily shut down so as to eliminate the generation of stray ultrasonic pulses during reception.

23. The system of claim 8 further comprising at least one buzzer for providing an audible indication, said buzzer being activated simultaneously with said internal display icon to indicate a dangerous approach distance, said audible indication being provided with a varying pitch as this distance is closed.

24. The system of claim 8 wherein a plurality of transmission/reception units are mounted laterally apart along a width to be protected on the vehicle, for increased measurement accuracy.

25. The system of claim 8 wherein a visual warning is provided to the driver of a following vehicle, when his vehicle approaches the equipped vehicle too closely, by provision of a signal which controls a rapid flashing sequence of brake light operation.

26. The system of claim 8 wherein a visual warning is provided to the driver of a following vehicle, when his vehicle approaches the equipped vehicle too closely, by provision of a message on said external display.

27. The system of claim 26 wherein said visual warning is provided as a message on said external display means when the equipped vehicle is parked.

28. The system of claim 26 further comprising at least one camera mounted on the vehicle so as to obtain pictures of an area of the vehicle associated with one of said transmission/reception units, when reflected pulses are received from said unit.

29. The system of claim 1 further comprising means for detecting an intruder within the vehicle based on examination of said sensor means information,

said intruder detection means being operative with said control means for generating an audible alarm upon detecting an intruder and displaying an alarm message on said external display means.

30. The system of claim 29 wherein said intruder detection means comprises means for periodically transmitting within the vehicle interior ultrasonic energy pulses and means for receiving reflected ones of said transmitted ultrasonic energy pulses, and wherein said control means comprises:

means for amplifying said received pulses and providing an output signal; and

means for determining whether the level of said output signal is constant within a range of limits over a predetermined interval,

said control means providing an alarm if changes are detected in said output signal level over said predetermined interval.

31. The system of claim 29 wherein said intruder detection means is armed and disarmed automatically in accordance with a predetermined pattern of driver behavior including a time delay before alarm activation upon driver entry before engine ignition.

32. A vehicle proximity warning system for indicating the approach distance to an obstacle comprising:

means for periodically transmitting ultrasonic energy pulses;

means for receiving reflected ones of said transmitted ultrasonic energy pulses;

means for amplifying said received pulses and providing an output signal;

timing means responsive to said output signal for determining the time interval between said transmitted and received pulses;

converter means producing a distance value in proportion to said time interval;

comparator means for determining the greater of said distance value and a set of predetermined threshold values each corresponding to an approach distance to the obstacle; and

internal display means responsive to said comparator means for displaying an icon representing the approach distance.

33. The system of claim 32 wherein said means for transmitting and means for receiving said ultrasonic energy pulses is substantially protected from weather interference by an arrangement including a hooded cover and at least one ultrasonic energy pulse reflector.

34. A method of indicating the approach distance of a vehicle to an obstacle comprising the steps of:

periodically transmitting ultrasonic energy pulses;

receiving reflected ones of said transmitted ultrasonic energy pulses;

amplifying said received pulses and providing an output voltage;

monitoring said output voltage and a predetermined threshold voltage and providing a control signal when said output voltage exceeds said threshold voltage, indicating the presence of an obstacle;

initiating a timing signal in response to said control signal;

producing a voltage discharge function having a predetermined discharge rate and being responsive to said timing signal for establishing a voltage discharge level at which said voltage discharge function is interrupted;

monitoring said voltage discharge level and a set of predetermined voltage threshold values each corresponding to an approach distance to the obstacle, and determining a display control signal dependent upon which of said threshold values is exceeded by said voltage discharge level; and

indicating the approach distance in accordance with said display control signal.

35. The method of claim 34 wherein the approach distance to said obstacle is directly proportional to the time interval between transmission of said ultrasonic pulses and the time at which said timing signal arrives at said converter multiplied by the discharge rate of said voltage discharge function.

36. The method of claim 35 wherein said time interval is flexibly adjusted in accordance with the elapsed time for arrival of said timing signal at said converter.

FIG. 1

10

SPKR — 14

TRANSMITTER DRIVER — 12

TIMING AND CONTROL — 16

32

M I C — 18

AMPLIFIER — 20

VCC

COMPARATOR — 22
(+) (−)

36

START STOP

START-STOP TIMING — 24

34

LED DISPLAY — 30

BUZZER OSCILATOR — 37

BUZZER — 38

TIMING TO VOLTAGE CONVERTER — 26

COMPARATOR ARRAY — 28

FIG. 2

FIG. 3a

FIG. 3b

FIG. 4

42

+3m 2m 1.2m 0.6m 0.3m ! 0.METER

46

FIG. 5

FIG. 6

50

CPU

POWER/CONTROL BUS

START

INITIALIZE — 90

SEND PULSE BURST
TO
VEHICLE RIGHT REAR — 92

94
ECHO
RECEIVED
?

NO

96
TIME
G.T. I8
MSEC.
?

NO

YES

YES

SET PROPER DISTANCE
LED +
RIGHT IND. — 98

SEND PULSE BURST
TO
VEHICLE LEFT REAR — 100

102
ECHO
RECEIVED
?

NO

104
TIME
G.T. I8
MSEC.
?

NO

YES.

YES

SET PROPER DISTANCE
LED +
LEFT IND. — 106

A

FIG: 7

A

SEND PULSE BURST
TO
VEHICLE RIGHT SIDE — 108

ECHO
W/I 20 MSEC.
? — 110

NO

YES

BLINK RIGHT LED
WITH
NO DIST. IND. — 112

SEND PULSE BURST
TO
VEHICLE LEFT SIDE — 114

ECHO
W/I 20 MSEC.
? — 116

NO

YES

BLINK LEFT LED
WITH
NO DIST. IND. — 118

B

FIG. 8

20

FIG. 9

C

138
REVERSE
DIRECTION
?
NO
YES

140
SET PROPER
INDICATION
ON REAR DISPLAY

142
VEHICLE
DECELERATION
?
NO
YES

144
SET PROPER
INDICATION
ON REAR DISPLAY

146
INTRUDER
?
NO
YES

148
SET PROPER
INDICATION
ON REAR DISPLAY

150
RIGHT
OR LEFT TURN
?

152
SET PROPER
INDICATION
ON REAR DISPLAY

TO
START

FIG. 10

European
Patent Office

**EUROPEAN SEARCH
REPORT**

Application Number

**EP 90 63 0140**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WESCON CONFERENCE RECORD 18-20 November 1986, pages 1-9, Los Angeles, CA, US; T. LANCASTER: "A Vehicle Sonar Obstacle Detection Unit" * figure 1; abstract * | 1 | B 60 R 16/02 |
| X | DE-A-2 337 010 (L. SOBKOWIAK) * figure 1; claim 1; page 12, line 14 - page 13, line 2 * | 1 | |
| A | EP-A-0 326 668 (STANLEY ELECTRIC) * figure 1; abstract * | 2 | |
| D,A | US-A-4 694 296 (K. SAZAKI et al.) * figure 1; abstract * | 17 | |
| A,D | US-A-4 293 947 (W.J. BRITTAIN) * figure 1; abstract * | | |
| A | GB-A-2 040 092 (REINO INT.) * figure 1; abstract * | | |
| A | DE-A-3 112 726 (I. MILINIS) * figure 1 * | | |
| | | | TECHNICAL FIELDS SEARCHED (Int. Cl.5) |
| | | | B 60 R B 60 Q G 08 G |

The present search report has been drawn up for all claims

| Place of search | Date of completion of search | Examiner |
|---|---|---|
| Berlin | 23 November 90 | BEITNER M.J.J.B. |

CATEGORY OF CITED DOCUMENTS

X : particularly relevant if taken alone
Y : particularly relevant if combined with another
   document of the same catagory
A : technological background
O : non-written disclosure
P : intermediate document
T : theory or principle underlying the invention

E : earlier patent document, but published on, or after
   the filing date
D : document cited in the application
L : document cited for other reasons

&: member of the same patent family, corresponding
   document